# EUROPÄISCHE PATENTSCHRIFT

(11) **EP 0 460 365 B1**
(45) Veröffentlichungstag und Bekanntmachung des Hinweises auf die Patenterteilung: **01.03.1995**
(21) Anmeldenummer: 91104283.6
(22) Anmeldetag: 20.03.1991
(51) Int. Cl.: G02B 6/24, G02B 6/255

(54) **Vorrichtung zum Justieren von einander paarweise gegenüberliegenden Lichtwellenleiterenden**
Device for adjusting the ends of optical fibres facing each other in pairs
Dispositif d'ajustage des extrémités de fibres optiques disposées en face deux à deux

(30) Priorität: 07.06.1990 DE 4018226
(43) Veröffentlichungstag der Anmeldung: 11.12.1991
(73) Patentinhaber: ANT Nachrichtentechnik GmbH, D-71522 Backnang (DE)
(72) Erfinder: Bühner, Martin, Dipl.-Ing. (FH), W-7160 Gaildorf (DE); Haas, Walter, W-7151 Burgstetten (DE); Bohmwetsch, Dieter, W-7150 Backnang (DE)

(56) Entgegenhaltungen:
- EP-A- 0 129 048
- EP-A- 0 216 307
- DE-A- 3 639 458
- DE-A- 3 641 707

## Beschreibung

Die Erfindung betrifft eine Vorrichtung zum Justieren von einander paarweise gegenüberliegenden Lichtwellenleiterenden nach dem Oberbegriff des Patentanspruches 1.

Aus der EP 216 307 A2 ist eine mechanische Vorrichtung zum Aufeinandereinjustieren der Enden zweier optischer Faserendabschnitte in drei Richtungen bekannt. Die Vorrichtung besteht aus zwei Faserhalterungen, die auf jeweils einer von zwei identischen Verstelleinheiten fixiert sind. Jede der beiden Verstelleinheiten weist einen fixierbaren Grundkörper und einen daran angelenkten, durch eine Stellschraube um eine in Längsrichtung der Faserendabschnitte ausgerichtete Drehachse drehbaren Hebelarm auf. Auf dem Hebelarm ist unter Abstand von der Drehachse jeweils eine Faserhalterung angebracht.

Auch aus der DE 32 46 358 A1 ist eine Vorrichtung zum spielfreien Verschieben von Objekten in einem Koordinatensystem bekannt. Die Vorrichtung besteht aus Grundplatte, Zwischenplatte und Trägerplatte mit Objektaufnahme. Die Zwischenplatte ist auf einer Längsseite über ein erstes Gelenk mit der Grundplatte und auf der anderen Längsseite über ein zweites Gelenk mit der Trägerplatte verbunden. In der Zwischenplatte steckt eine gegen die Grundplatte angreifende Justierschraube und in der Trägerplatte eine weitere gegen die Zwischenplatte angreifende Justierschraube. Beim Betätigen der Justierschrauben werden Zwischen- und Trägerplatte geschwenkt und ein Objekt in Richtung der X- und der Y-Koordinate verschoben. Zur Herstellung von Lichtwellenleiterverbindungen wirdein Lichtwellenleiterende in einer solchen Vorrichtung angebracht und bezüglich einem zweiten festen Lichtwellenleiterende einjustiert.

Derartige Positioniervorrichtungen sind zur Ankopplung von Lichtwellenleiterenden notwendig. Insbesondere zum Spleißen müssen die Lichtwellenleiterenden genau aufeinander einjustiert sein. In Spleißgeräten sind die Anforderungen an die Genauigkeit hoch und es steht nur ein Minimum an Platz zur Verfügung. Besondere hohe Anforderungen werden bezüglich der zur Längsrichtung der Lichtwellenleiter transversalen Justierung gestellt Die longitudinale Justierung kann mit üblichen Mitteln, wie Verschiebetischen oder Kugelgeradführungen erfolgen, die für diese Zwecke ausreichend genau sind.

Insbesondere beim gleichzeitigen Spleißen mehrerer Paare von Lichtwellenleiterenden ist die transversale Justage sehr wichtig. Die Lichtwellenleiterenden können dabei in Klemmvorrichtungen, wie sie aus dem deutschen Gebrauchsmuster G 89 14 089 bekannt sind, festgelegt werden. Für eine Justage von Lichtwellenleiterarrays ist die Anordnung gemäß der EP 216 307 A2 bzw. der DE 32 46 358 A1 nicht geeignet, da die Ebenen, in denen die Arrays liegen könnten, durch die Justierbewegung gegeneinander verkippt werden.

Aus der DE 36 39 458 A1 ist eine Spleißvorrichtung bekannt, die aus einer Grundplatte, einem darauf befestigten Sockel mit einer Aufnahme für eine Faserhalteplatte und aus einem mit Abstand zum Sockel auf der Grundplatte angeordneten in drei Koordinatenrichtungen verstellbarem Mikromanipulator, ebenfalls mit einer Aufnahme für eine Faserhalteplatte, besteht. Die zu verspleißenden Lichtwellenleiterenden sind parallel zueinander angeordnet. Die Lichtwellenleiterenden eines Kabels sind jeweils in einer Ebene angeordnet, wobei die Ebenen zueinander parallel versetzt sind.

Eine Vorrichtung mit einem in drei Koordinatenrichtungen verstellbaren Mikromanipulator braucht sehr viel Platz, der bei einem Spleißgerät oft nicht zur Verfügung steht.

Aus der DE 36 41 707 A1 ist eine Vorrichtung zum Durchverbinden von einem einzelnen mit einem von mehreren in einer Ebene nebeneinander liegenden Lichtwellenleitern bekannt.

Der einzelne Lichtwellenleiter befindet sich in einer Aufnahme, die mit einer aus vier identischen Blattfedern bestehenden Anordnung verstellt werden kann. Die Blattfedern bilden paarweise ein Parallelogramm. Eine Justage in zwei zueinander transversalen Richtungen ist mit der Anordnung nicht möglich.

Es ist die Aufgabe der Erfindung, eine Vorrichtung zum Justieren von einander paarweise gegenüberliegenden Lichtwellenleiterenden anzugeben, die eine hochgenaue Positionierung auch von mehreren Paaren von gegenüberliegenden Lichtwellenleiterenden bei geringem Platzbedarf erlaubt.

Die Aufgabe wird gelöst durch eine Vorrichtung mit den Merkmalen des Patentanspruches 1. Vorteilhafte Weiterbildungen sind in den Unteransprüchen angegeben.

Die erfindungsgemäße Vorrichtung zum Justieren voneinander paarweise gegenüberliegenden Lichtwellenleiterenden ist sehr einfach aufgebaut. Sie ist einteilig, beispielsweise mittels der Drahterodiertechnik, herstellbar. Durch die Anordnung aus gleichen parallelen Blattfedern, auch Federgelenkführung genannt, ist eine spiel- und reibungsfreie Führung möglich.

Es ist bei dieser Art von Führung wichtig, daß sie nur für kleinste Verschiebungen verwendet wird. Die Bahn des bewegbaren Teils ist nämlich keine Gerade, sondern näherungsweise eine Parabel. Eine exakte geradlinige Führung ist nicht möglich. Die unerwünschte Querbewegung ist jedoch klein, wenn der maximale Verschiebeweg im Verhältnis zur Länge der Blattfedern gering ist. Für hohe Ansprüche sollte dieses Verhältnis kleiner als 2 % sein. Es ist günstig, den Verschiebeweg zu gleichen Teilen vor und nach der Strecklage der Blattfedern vorzusehen. Da man also bei einem geringen Verschiebeweg annähernd von einer linearen Bewegung ausgehen kann, wird mit der erfindungsgemäßen Vorrichtung ein Parallelversatz der Lichtwellenleiterenden ermöglicht. Dadurch, daß die Verschiebewege der beiden Anordnungen aus Blattfedern einen Winkel einschließen und zur Längsrichtung der Lichtwellenleiter transversal verlaufen, ist eine Justierung der Lichtwellenleiterenden in den zu den Lichtwellenleitern transversalen Richtungen mit der erfindungsgemäßen Vorrichtung möglich. Es ist dabei eine Voraussetzung, daß die Verstelleinheiten so genau angebracht sind, daß die in die verschiedenen Halterungen eingelegten Lichtwellenleiter zueinander parallel verlaufen. Eine vorteilhafte Möglichkeit der Justage ist gegeben, wenn die Verschiebewege der Blattfedern der beiden Anordnungen mit den beiden Beobachtungsrichtungen, aus denen man die Justierung der Lichtwellenleiter überprüft, zusammenfallen. Dann sind die Lichtwellenleiter in den beiden Justierrichtungen unabhängig voneinander einjustierbar. Wenn mehrere Paare von Lichtwellenleiterenden gleichzeitig aufeinander einjustiert werden sollen, so ist es notwendig, daß die in einer Halterung angebrachten Lichtwellenleiter zueinander parallel verlaufen. Wenn die Halterungen Nuten aufweisen, so sind diese Nuten zueinander parallel. Die in einer Halterung angebrachten Lichtwellenleiter befinden sich auf einer Fläche. Diese Fläche darf nicht so gekrümmt sein, daß die Lichtwellenleiter nicht mehr auf einer Geraden liegen. Eine solche Krümmung kann sich beim Spleißen der Lichtwellenleiter vorteilhaft auswirken. Die Lichtwellenleiter können beispielsweise auf einem Ausschnitt eines Zylindermantels angeordnet sein, wobei die Richtung der Zylinderachse mit der Längsrichtung der Lichtwellenleiter zusammenfällt. Alle Flächennormalen stehen dann senkrecht auf der Längsrichtung der Lichtwellenleiter. Es ist von Vorteil, wenn die Nuten in einer Ebene liegen, da die Lichtwellenleiterenden dann durch Anbringen einer Klemmvorrichtung direkt in die Nuten eingelegt werden können. Zur Halterung der Lichtwellenleiter in den Nuten kann beispielsweise ein Magnethalter vorgesehen sein. Wenn die Längsachsen der Blattfedern parallel zur Längsrichtung der Lichtwellenleiter verlaufen und die Breitseiten der parallelen Blattfedern einen Winkel zu den Ebenen mit den Nuten einschließen, so kann eine besonders raumsparende Vorrichtung erhalten werden, wenn man die Stellelemente so anordnet, daß die Verstellwege parallel zu den Ebenen mit den Nuten verlaufen. Der geringe Platzbedarf der Anordnung ist besonders dann vorteilhaft, wenn die Anordnung in einem Spleißgerät eingesetzt werden soll. Wenn die Lichtwellenleiterenden bereits in einer Klemmvorrichtung festgelegt sind, so ist es sinnvoll, diese Klemmvorrichtung an einem Träger am Grundkörper der Verstelleinheiten zu befestigen. Damit durch die Bewegung des bewegbaren Teils der Verstelleinheiten beim Einjustieren keine Spannung an den Lichtwellenleitern erzeugt wird, denn die Klemmvorrichtungen liegen zunächst am Grundkörper fest, kann auch der Träger in einer zur Längsrichtung des Lichtwellenleiters transversalen Richtung bewegt werden. Dadurch kann ein zwischen den Nuten und der Klemmvorrichtung entstehender Querversatz ausgeglichen werden.

Die Anordnungen aus parallelen gleichen Blattfedern, mit denen die bewegbaren Teile an den Grundkörpern befestigt sind, können unterschiedliches Aussehen haben. Im einfachsten Fall bestehen sie aus zwei parallelen Blattfedern. Dann ist die benötigte Kraft zum Verstellen am geringsten. Bei sehr geringen Verstellungen kann es jedoch günstig sein, wenn die Verstellkraft größer ist. Um dies zu erreichen, kann man weitere Blattfedern parallel anordnen. Dies kann beispielsweise derart geschehen, daß die Längsachsen der Blattfedern jeweils mit dem gleichen Abstand zur nächsten Blattfeder auf einer Geraden angeordnet sind. Die Breitseiten der Blattfedern sollten dabei nicht in einer Ebene liegen, sondern einen Abstand zueinander aufweisen. Es können aber beispielsweise auch vier Blattfedern derart angeordnet sein, daß sie mit vier parallelen Kanten eines Parallelepipeds zusammenfallen.

Ein Ausführungsbeispiel der Erfindung wird anhand der Figuren erläutert. Es zeigen

Figur 1 eine räumliche Darstellung der Verstelleinheiten in ausgelenktem und nicht ausgelenktem Zustand.

Figur 2 eine Draufsicht und eine Seiteneinsicht einer Verstelleinheit mit einem Träger für eine Klemmvorrichtung.

Figur 3 die Anordnung der beiden Verstelleinheiten in der erfindungsgemäßen Vorrichtung.

Figur 4 eine schematische Darstellung der Lage der Lichtwellenleiter in einer Verstelleinheit.

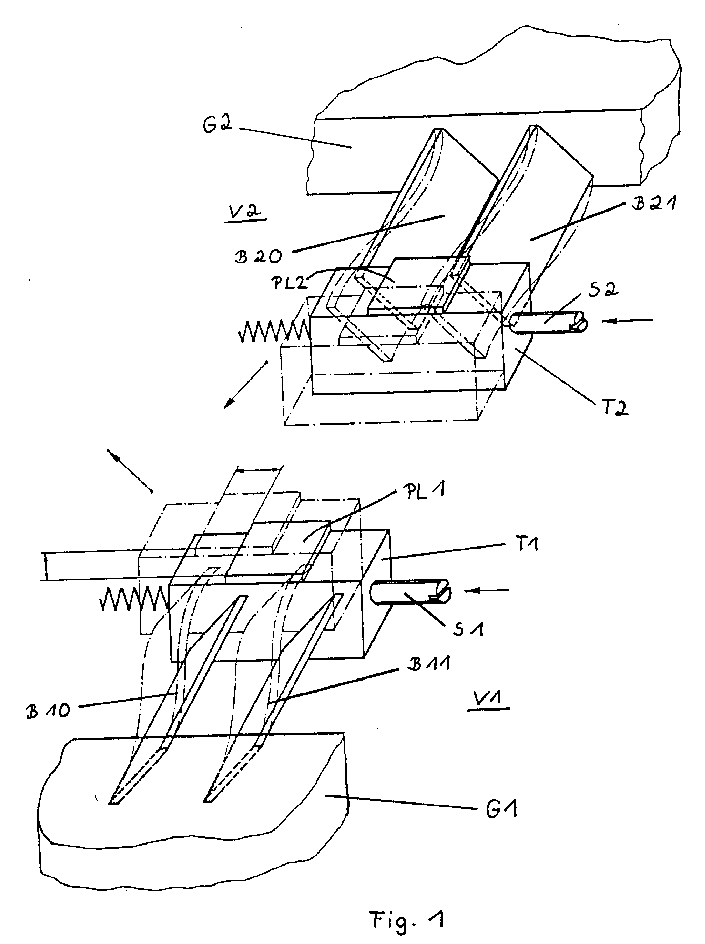

In Figur 1 sind zwei Verstelleinheiten V1, V2 in ihrer Einbaulage dargestellt. Die Verstelleinheiten V1, V2 bestehen jeweils aus einem Grundkörper G1, G2 und einem bewegbaren Teil T1, T2. Die Grundkörper G1, G2 werden beispielsweise auf einer gemeinsamen Platte befestigt. Es wäre auch denkbar, daß ein oder beide Grundkörper auf je einer Verschiebeeinheit befestigt werden, die zur Justage in der Längsrichtung der Lichtwellenleiter dienen. Auf den bewegbaren Teilen T1, T2 ist jeweils ein Plättchen PL1, PL2 befestigt. Dieses Plättchen PL1, PL2 weist Nuten auf (in der Zeichnung nicht ersichtlich), in die die Lichtwellenleiter eingelegt werden können. Die bewegbaren Teile T1, T2 sind jeweils mittels zweier Blattfedern B10, B11, B20, B21 an den zugehörigen Grundkörpern G1, G2 befestigt. Die zu einer Verstelleinheit V1, V2 gehörenden Blattfedern B10, B11 bzw. B20, B21 sind zueinander parallel. Sie sind unter Abstand zueinander am Grundkörper G1, G2 und am bewegbaren Teil T1, T2 angebracht. Die Blattfedern B10, B11 bzw. B20, B21 liegen nicht in einer Ebene, da sonst die notwendige Stabilität und die parallele Bewegung der Blattfederenden nicht gegeben ist. Die Blattfedern sind, bezogen auf die Ebene in der die Lichtwellenleiter liegen, die mit der Ebene des Plättchens PL1, PL2 zusammenfällt, geneigt. Die Neigung der Blattfedern B10, B11 bzw. B20, B21 der beiden gegenüberliegenden Verstelleinheiten V1, V2 verläuft in entgegengesetzter Richtung. Der mögliche Verstellweg des bewegbaren Teils T1, T2 steht senkrecht auf der Breitseite der Blattfedern B10, B11 bzw. B20, B21. Wenn die geneigten Blattfedern der verschiedenen Verstelleinheiten also zueinander senkrecht stehen, so sind auch die Verstellwege der Verstelleinheiten zueinander senkrecht. Zur Verstellung der bewegbaren Teile T1, T2 sind an diesen Teilen Stellelemente S1, S2 angeordnet. Im Prinzip genügt jeweils ein Stellelement S1, S2. Der Verstellweg der Verstellelemente S1, S2 verläuft parallel zur Ebene, in der sich die Lichtwellenleiter befinden und senkrecht zu deren Längsrichtung. Er fällt also nicht mit der Richtung des Verschiebeweges des bewegbaren Teils T1, T2 zusammen. Die Verstellwege der beiden Verstelleinheiten V1, V2 sind zueinander parallel. In Figur 1 sind die Verstelleinheiten in Ruhelage (durchgezogene Linien) und in einer ersten ausgelenkten Lage (strichpunktierte Linien) dargestellt. Das bewegbare Teil T1, T2 mit dem Plättchen PL1 bzw. PL2 und somit mit den Lichtwellenleitern wird parallel versetzt.

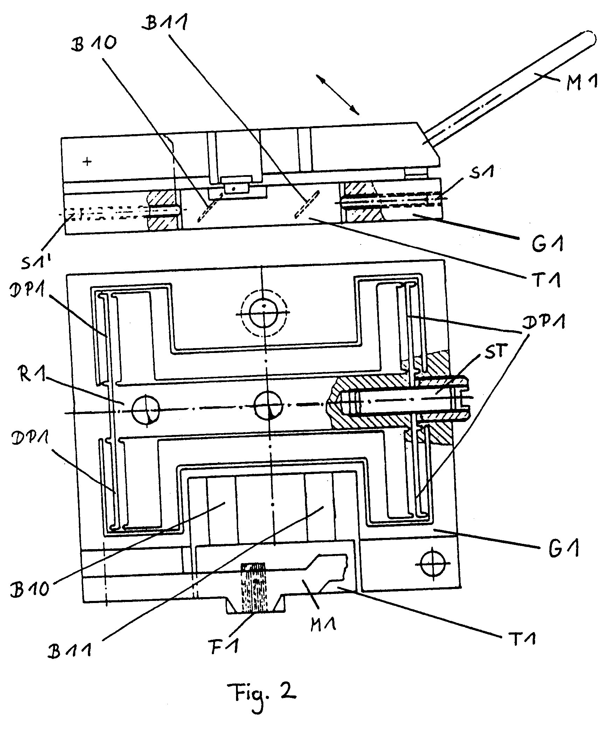

Figur 2 zeigt eine Verstelleinheit V1 der erfindungsgemäßen Vorrichtung in Draufsicht und Seitenansicht. Ein Grundkörper G1 weist seitlich eine quaderförmige Aussparung auf, in der ein bewegbares Teil T1 angeordnet ist. Das bewegbare Teil ist mittels zweier Blattfedern B10, B11 am Grundkörper G1 befestigt. Das bewegbare Teil T1 weist an seiner Oberfläche eine größere Anzahl von parallelen Nuten F1 auf. Die Nuten F1 befinden sich in einer Ebene. Die Blattfedern B10, B11 sind gegen diese Ebene geneigt. Sie sind zueinander parallel, liegen aber nicht in einer gemeinsamen Ebene. Das bewegbare Teil T1 ist mittels zweier Stellelemente S1, S1′, die im Grundkörper G1 gelagert sind und an den Seitenflächen des bewegbaren Teils T1 angreifen, bewegbar. In die Nuten F1 können Lichtwellenleiterenden eingelegt werden, die dann mit dem Magnethalter M1 in den Nuten gehalten werden. Der Grundkörper G1 weist einen Träger R1 für eine Klemmvorrichtung mit Lichtwellenleitern auf. Der Träger R1 ist über ein System von Doppelparallelfedern DP1 am Grundkörper befestigt. Der Träger R1 kann mittels einer Stellschraube ST mit Differentialgewinde gegenüber dem Grundkörper G1 bewegt werden.

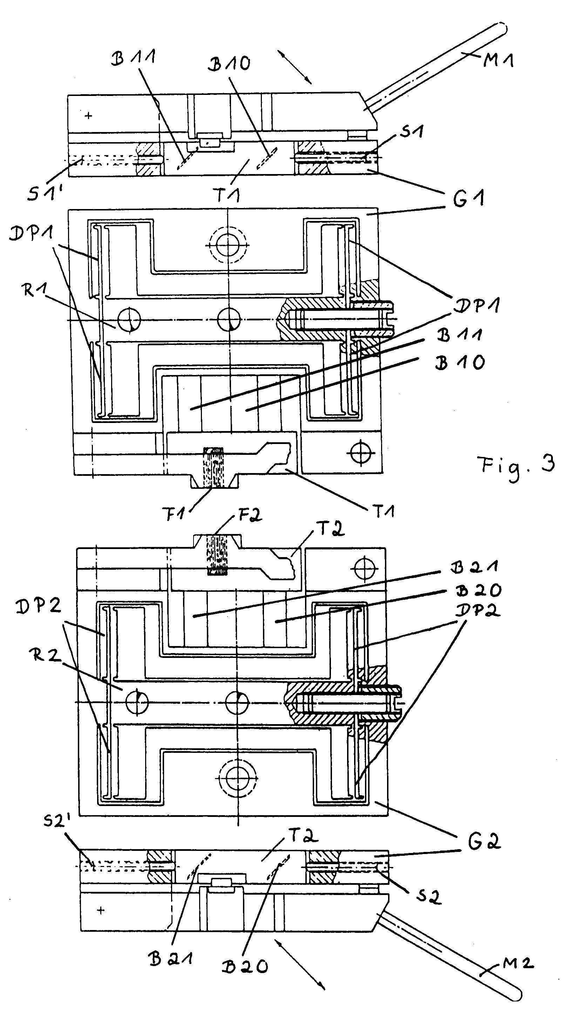

In Figur 3 ist nochmals dargestellt, wie die Verstelleinheiten V1, V2 gegenüberliegend angeordnet sind. Die Verstelleinheiten sind entsprechend dem in Figur 2 dargestellten auch hier in Aufsicht und Seitenansicht gezeigt.

Wenn man die erfindungsgemäße Vorrichtung zum Justieren von einander paarweise gegenüberliegenden Lichtwellenleiterenden, beispielsweise von Bändchenkabeln, benutzen möchte, so geht man wie folgt vor: Zunächst wird man die in einer Klemmvorrichtung gehaltenen Lichtwellenleiterenden auf den Trägern R₁, R₂ befestigen. Dies kann beispielsweise mittels in den Trägern befindlichen Paßbohrungen und an den Klemmvorrichtungen befindlichen Paßstiften geschehen. Der Träger mit der Klemmvorrichtung kann dann so bewegt werden, daß die Lichtwellenleiterenden in die entsprechenden Nuten eingelegt werden können. Die Lichtwellenleiterenden werden dann in den Nuten fixiert. Zum Aufeinandereinjustieren der Lichtwellenleiterenden werden nun die bewegbaren Teile der beiden Verstelleinheiten aufeinander einjustiert. Dadurch entsteht wieder ein Querversatz zwischen den Nuten mit den Lichtwellenleitern und der Lage der Klemmodule. Dieser Querversatz kann erneut mit Hilfe der Doppelparallelfederanordnung zwischen Träger und Grundkörper der Verstelleinheit ausgeglichen werden.

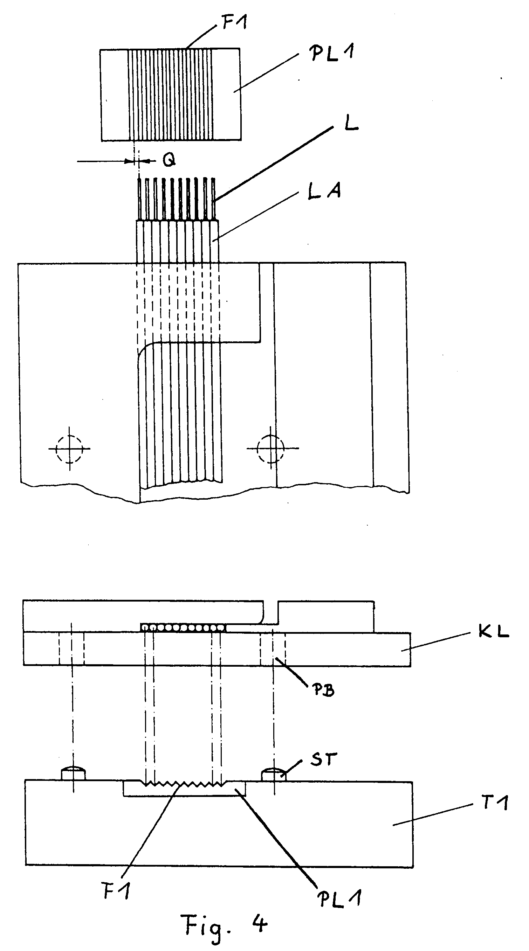

In Figur 4 ist in Seitenansicht und Draufsicht dargestellt, wie es zu dem Querversatz Q zwischen den Nuten F1 und den Lichtwellenleitern L kommt. Aus der Darstellung ist ersichtlich, daß die Lichtwellenleiter L in der Klemmvorrichtung KL mit ihren Coatings LA festgelegt sind. Man erkennt auch, daß die Klemmvorrichtung KL Paßbohrungen PB aufweist und der Träger Paßstifte ST, mit denen die beiden Einheiten aneinander fixiert werden. Die Nuten F1 sind in ein Plättchen PL1 eingefräst oder eingeätzt, das am bewegbaren Teil T1 befestigt ist.

## Patentansprüche

1. Vorrichtung zum Justieren von einander paarweise gegenüberliegenden Lichtwellenleiterenden in zur Längsrichtung der Lichtwellenleiter (LWL) transversalen Richtungen, mit zwei gleichartig aufgebauten Verstelleinheiten (V1, V2), die jeweils einen festen Grundkörper (G1, G2) und ein mit dem jeweiligen Grundkörper mittels einer elastischen Anordnung verbundenes, bewegbares Teil (T1, T2) aufweisen, und mit jeweils einer an den bewegbaren Teilen (T1, T2) angebrachten Halterung (PL1, PL2) für wenigstens einen Lichtwellenleiter, wobei die beiden Halterungen derart gestaltet sind, daß der wenigstens eine in die Halterung des ersten bewegbaren Teils (T1) einzulegende Lichtwellenleiter (LWL) zu dem wenigstens einen in die Halterung des zweiten bewegbaren Teils (T2) einzulegenden Lichtwellenleiter (LWL) parallel verläuft, und wobei die elastischen Anordnungen der beiden Verstelleinheiten derart angeordnet sind, daß die bewegbaren Teile so gegeneinander bewegbar sind, daß die Bewegungsrichtungen zueinander einen Winkel einschließen und zur Längsrichtung der Lichtwellenleiter (LWL) transversal verlaufen, gekennzeichnet durch folgende Merkmale:
a) in die Halterungen (PL1, PL2) sind jeweils mehrere Lichtwellenleiter einlegbar;
b) die Halterung jedes bewegbaren Teils (T1, T2) ist derart, daß die darin einzulegenden Lichtwellenleiter zueinander parallel sind;
c) die Halterung jedes bewegbaren Teils (T1, T2) ist derart gestaltet, daß die Achsen der darin einzulegenden Lichtwellenleiter eine gemeinsame Fläche definieren;
d) die elastischen Anordnungen der beiden Verstelleinheiten bestehen jeweils aus mehreren gleichen parallelen Blattfedern (B10, B11, B20, B21), die mit einem Ende an einem bewegbaren Teil (T1, T2) und mit dem anderen Ende am zugehörigen Grundkörper (G1, G2) befestigt sind; und
e) Diese elastischen Anordnungen aus Blattfedern sind jeweils derart angeordnet, daß die gemeinsamen Flächen der beiden Verstelleinheiten so gegeneinander verschiebbar sind, daß die Verschieberichtungen zueinander den obengenannten Winkel einschließen, während die gemeinsamen Flächen parallel zueinander bleiben.

2. Vorrichtung nach Anspruch 1, dadurch gekennzeichnet, daß die Halterungen (PL1, PL2) jeweils mindestens eine Nut (F1, F2) aufweisen, in die je ein Lichtwellenleiterende einlegbar ist.

3. Vorrichtung nach einem der Ansprüche 1 oder 2, dadurch gekennzeichnet, daß die bewegbaren Teile (T1, T2) jeweils mittels einer Anordnung aus zwei parallelen Blattfedern (B10, B11, B20, B21) mit dem zugehörigen Grundkörper (G1, G2) verbunden sind.

4. Vorrichtung nach einem der Ansprüche 1, 2 oder 3, dadurch gekennzeichnet, daß die beiden gemeinsamen Flächen der beiden bewegbaren Teile (T1, T2), auf denen die einzulegenden Lichtwellenleiterenden jeweils angeordnet sind, eben sind.

5. Vorrichtung nach einem der Ansprüche 1, 2 oder 3, dadurch gekennzeichnet, daß die beiden gemeinsamen Flächen der beiden bewegbaren Teile (T1, T2) derart gekrümmt sind, daß alle Flächennormalen zur Längsrichtung der Lichtwellenleiter senkrecht stehen, wobei diese beiden gemeinsamen Flächen gleich gekrümmt sind.

6. Vorrichtung nach einem der Ansprüche 1 bis 5, dadurch gekennzeichnet, daß die Längsachsen der Blattfedern (B10, B11, B20, B21) parallel zur Längsrichtung der Lichtwellenleiter verlaufen.

7. Vorrichtung nach Anspruch 4, dadurch gekennzeichnet, daß die Längsachsen der Blattfedern (B10, B11, B20, B21) parallel zur Längsrichtung der Lichtwellenleiter verlaufen und daß die Breitseiten der parallelen Blattfedern (B10, B11, B20, B21) einer Verstelleinheit (V1, V2) jeweils unter einem Winkel zu den gemeinsamen Ebenen verlaufen.

8. Vorrichtung nach einem der Ansprüche 1 bis 7, dadurch gekennzeichnet, daß jede Verstelleinheit (V1, V2) mindestens ein Stellelement (S1, S2) aufweist, dessen Verstellweg zur Verschieberichtung des jeweiligen bewegbaren Teils (T1, T2) einen Winkel einschließt und daß die Verstellwege der verschiedenen Stellelemente (S1, S2) zueinander parallel sind.

9. Vorrichtung nach einem der Ansprüche 1 bis 8, dadurch gekennzeichnet, daß die Grundkörper (G1, G2) jeweils einen Träger (R1, R2) für eine Klemmvorrichtung aufweisen.

10. Vorrichtung nach Anspruch 9, dadurch gekennzeichnet, daß die Träger (R1, R2) in einer zur Längsrichtung des Lichtwellenleiters transversalen Richtung mittels einer Doppelparallelfederanordnung (DP1, DP2) bewegbar sind.

11. Vorrichtung nach Anspruch 10, dadurch gekennzeichnet, daß die Doppelparallelfederanordnungen so angeordnet sind, daß die Bewegungsrichtung der Träger (R1, R2) jeweils parallel zu der Fläche, in der die Lichtwellenleiter einlegbar sind, und senkrecht zur Längsrichtung der Lichtwellenleiter erfolgt.

12. Vorrichtung nach einem der Ansprüche 1 bis 11, dadurch gekennzeichnet, daß die Verschieberichtungen der bewegbaren Teile (T1, T2) der beiden Verstelleinheiten (V1, V2) mit den beiden Beobachtungsrichtungen zur Beobachtung der Lichtwellenleiter zusammenfallen.

## Claims

1. Device for adjusting optical conductor ends, which lie one opposite the other in pairs, in directions transverse to the longitudinal direction of the optical conductors (LWL), with two similarly constructed adjusting units (V1, V2), which each display a fixed base body (G1, G2) and a movable part (T1, T2), which is connected with the respective base body by means of an elastic arrangement, and with a respective retaining device (PL1, PL2), which is mounted at the movable parts (T1, T2), for at least one optical conductor, wherein both the retaining devices are structured in such a manner that the at least one optical conductor (LWL) to be laid into the retaining device of the first movable part (T1) extends parallelly to the at least one optical conductor to be laid into the retaining device of the second movable part (T2) and wherein the elastic arrangements of both the adjusting units are arranged in such a manner that the movable parts are so movable one relative to the other that the directions of movement are at an angle one to the other and extend transversely to the longitudinal direction of the optical conductors (LWL), characterised by the following features:
a) several optical conductors are layable into each of the retaining devices (PL1, PL2),
b) the retaining device of each movable part (T1, T2) is of such a kind that the optical conductors, which are to be laid into it, extend one parallelly to the other,
c) the retaining device of each movable part (T1, T2) is structured in such a manner that the optical conductors, which are to be laid into it, define a common area,
d) the elastic arrangements of both the adjusting units each consist of several like parallel leaf springs (B10, B11, B20, B21), which are fastened by one end at a movable part (T1, T2) and by the other end at the associated base body (G1, G2), and
e) these elastic arrangements of leaf springs are each time arranged in such a manner that the common areas of both the adjusting units are so displaceable one relative to the other that the directions of displacement are at the aforementioned angle one to the other, whilst the common areas remain one parallel to the other.

2. Device according to claim 1, characterised thereby, that the retaining devices (PL1, PL2) each display at least one groove (F1, F2), into which a respective optical conductor end is layable.

3. Device according to one of the claims 1 and 2, characterised thereby, that the movable parts (T1, T2) are each connected with the associated base body (G1, G2) by means of a respective arrangement of two parallel leaf springs (B10, B11, B20, B21).

4. Device according to one of the claims 1 to 3, characterised thereby, that both the common areas of both the movable parts (T1, T2), on which the optical conductor ends to be laid in are respectively arranged, are planar.

5. Device according to one of the claims 1 to 3, characterised thereby, that both the common areas of both the movable parts (T1, T2) are curved in such a manner that all surface normals are perpendicular to the longitudinal direction of the optical conductors (LWL), wherein both these common areas are equally curved.

6. Device according to one of the claims 1 to 5, characterised thereby, that the longitudinal axes of the leaf springs (B10, B11, B20, B21) extend parallelly to the longitudinal direction of the optical conductors.

7. Device according to claim 4, characterised thereby, that the longitudinal axes of the leaf springs (B10, B11, B20, B21) extend parallelly to the longitudinal direction of the optical conductors (LWL) and that the wide sides of the parallel leaf springs (B10, B11, B20, B21) of an adjusting unit (V1, V2) each extend at an angle to the common planes.

8. Device according to one of the claims 1 to 7, characterised thereby, that each adjusting unit (V1, V2) displays at least one setting element (S1, S2), the setting travel of which is at an angle to the direction of displacement of the respective movable part (T1, T2) and that the setting travels of the different setting elements (S1, S2) are one parallel to the other.

9. Device according to one of the claims 1 to 8, characterised thereby, that the base bodies (G1, G2) each display a respective carrier (R1, R2) for a clamping device.

10. Device according to claim 9, characterised thereby, that the carriers (R1, R2) are movable in a direction, which is transverse to the longitudinal direction of the optical conductors, by means of a double parallel spring arrangement (DP1, DP2).

11. Device according to claim 10, characterised thereby, that the double parallel spring arrangements are so arranged that the direction of movement of the carriers (R1, R2) is each time parallel to the area, into which the optical conductors are layable, and perpendicular to the longitudinal direction of the optical conductors (LWL).

12. Device according to one of the claims 1 to 11, characterised thereby, that the directions of displacement of the movable parts (T1, T2) of both the adjusting units (V1, V2) co-incide with both the viewing directions for observation of the optical conductors.

## Revendications

1. Dispositif pour l'ajustement d'extrémité de guides d'onde lumineuse se trouvant à l'opposé les unes des autres par paires, dans des directions transversales par rapport à la direction longitudinale des guides d'onde lumineuse (LWL), avec deux unités de déplacement (V1, V2) constituées du même type, qui, chaque fois, présentent un corps de base (G1, G2) et une partie (T1, T2) susceptible d'être mue, reliée, chaque fois, avec le corps de base au moyen d'un agencement élastique, et avec, chaque fois, un élément de maintien (PL1, PL2) adjoint aux parties (T1, T2) susceptibles d'être mues, les deux éléments de maintien étant configurés de telle sorte, qu'au moins un des guides d'onde lumineuse (LWL), à déposer dans l'élément de maintien de la première partie (T1) susceptible d'être mue, s'étend parallèlement à au moins un des guides d'onde lumineuse (LWL), à déposer dans l'élément de maintien de la deuxième partie (T2) susceptible d'être mue, et les agencements élastiques des deux unités de déplacement étant agencés de telle sorte, que les parties susceptibles d'être mues sont susceptibles d'être mues ainsi l'une par rapport à l'autre, que les directions de mouvement, l'une par rapport à l'autre, enferment un angle et s'étendent transversalement par rapport à la direction longitudinale des guides d'onde lumineuse (LWL), caractérisé par des caractéristiques suivantes :
a) dans les éléments de maintien (PL1, PL2), chaque fois, plusieurs guides d'onde lumineuse sont susceptibles d'être déposés ;
b) l'élément de maintien de chaque partie susceptible d'être mue (T1, T2) est configuré de telle sorte, que les guides d'onde lumineuse à déposer en lui sont parallèles les uns aux autres ;
c) l'élément de maintien de chaque partie susceptible d'être mue (T1, T2) est configuré de telle sorte, que les axes des guides d'onde lumineuse à déposer en lui définissent une surface commune ;
d) les agencements élastiques des deux unités de déplacement consistent, chaque fois, en plusieurs ressorts à lame (B10, B11, B20, B21) parallèles, semblables, qui, avec une extrémité, sont fixés à une partie susceptible d'être mue (T1, T2), et, avec l'autre extrémité, sont fixés au corps de base (G1, G2), associé ; et
e) ces agencements élastiques de ressorts à lame sont, chaque fois, agencés de telle sorte, que les surfaces communes des deux unités de déplacement sont ainsi susceptibles d'être translatées l'une par rapport à l'autre, que les directions de translation enferment l'une par rapport à l'autre l'angle nommé plus haut, tandis que les surfaces communes restent parallèles l'une à l'autre.

2. Dispositif selon la revendication 1, caractérisé en ce que les éléments de maintien (PL1, PL2), chaque fois, présentent au moins une rainure (F1, F2), dans laquelle, chaque fois, une extrémité de guide d'onde lumineuse est susceptible d'être déposée.

3. Dispositif selon une des revendications 1 ou 2, caractérisé en ce que des parties susceptibles d'être mues (T1, T2), chaque fois, sont reliées, au moyen d'un agencement de deux ressorts à lame parallèles (B10, B11, B20, B21), avec le corps de base (G1, G2) associé.

4. Dispositif selon une des revendications 1, 2 ou 3, caractérisé en ce que les deux surfaces communes des deux parties susceptibles d'être mues (T1, T2), sur lesquelles, les extrémités de guides d'onde lumineuse à déposer intérieurement sont, chaque fois, agencées, sont planes.

5. Dispositif selon une des revendications 1, 2 ou 3, caractérisé en ce que les deux surfaces communes des deux parties susceptibles d'être mues (T1, T2) sont courbées de telle sorte, que toutes les normales de surface se trouvent perpendiculaires à la direction longitudinale des guides d'onde lumineuse, ces deux surfaces communes étant courbées pareillement.

6. Dispositif selon une des revendications 1 à 5, caractérisé en ce que les axes longitudinaux des ressorts à lame (B10, B11, B20, B21) s'étendent parallèles à la direction longitudinale des guides d'onde lumineuse.

7. Dispositif selon la revendication 4, caractérisé en ce que les axes longitudinaux des ressorts à lame (B10, B11, B20, B21) s'étendent parallèles à la direction longitudinale des guides d'onde lumineuse, et en ce que les côtés de largeur des ressorts à lame parallèles (B10, B11, B20, B21) d'une unité de déplacement (V1, V2), chaque fois, s'étendent en formant un angle par rapport aux plans communs.

8. Dispositif selon une des revendications 1 à 7, caractérisé en ce que chaque unité de déplacement (V1, V2) présente au moins un élément de positionnement (S1, S2), dont le trajet de déplacement par rapport à la direction de translation, chaque fois, de la partie susceptible d'être mue (T1, T2) enferme un angle, et en ce que les trajets de déplacement des différents éléments de positionnement (S1, S2) sont parallèles l'un à l'autre.

9. Dispositif selon une des revendications 1 à 8, caractérisé en ce que les corps de base (G1, G2) présentent, chaque fois, un support (R1, R2) pour un dispositif de serrage.

10. Dispositif selon la revendication 9, caractérisé en ce que les supports (R1, R2) sont susceptibles d'être mus dans une direction transversale par rapport à la direction longitudinale du guide d'onde lumineuse, au moyen d'un agencement de ressorts parallèles double (DP1, DP2).

11. Dispositif selon la revendication 10, caractérisé en ce que les agencements de ressorts parallèles doubles sont ainsi agencés, que la direction de mouvement des supports (R1, R2), chaque fois, a lieu parallèlement à la surface, dans laquelle les guides d'onde lumineuse sont susceptibles d'être déposés intérieurement, et perpendiculairement à la direction longitudinale des guides d'onde lumineuse.

12. Dispositif selon une des revendications 1 à 11, caractérisé en ce que les directions de translation des parties susceptibles d'être mues (T1, T2), des deux unités de déplacement (V1, V2), coïncident avec les deux directions d'observation pour l'observation des guides d'onde lumineuse.
